# EUROPÄISCHE PATENTSCHRIFT

(11) **EP 1 057 610 B1**
(45) Veröffentlichungstag und Bekanntmachung des Hinweises auf die Patenterteilung: **21.08.2002**
(21) Anmeldenummer: 00890143.1
(22) Anmeldetag: 05.05.2000
(51) Int. Cl.: B29C 45/40

(54) **Form für Spritzgiesswerkzeuge**
Mould for injection moulding devices
Moule pour dispositifs à mouler par injection

(30) Priorität: 28.05.1999 AT 37499 U
(43) Veröffentlichungstag der Anmeldung: 06.12.2000
(73) Patentinhaber: Hefner GmbH Elastomere Verarbeitung, 4600 Wels (AT)
(72) Erfinder: Hefner, Christian, 4600 Wels (AT)
(74) Vertreter: Hehenberger, Reinhard, Dipl.-Ing.

(56) Entgegenhaltungen:
- EP-A- 0 713 756
- US-A- 4 402 657
- PATENT ABSTRACTS OF JAPAN vol. 1998, no. 05, 30. April 1998 (1998-04-30) -& JP 10 024425 A (KINUGAWA RUBBER IND CO LTD), 27. Januar 1998 (1998-01-27) -& DATABASE WPI Week 199814 Derwent Publications Ltd., London, GB; AN 1998-153269 XP002147422

## Beschreibung

Die Erfindung betrifft eine Form mit den Merkmalen des Oberbegriffes des Anspruches 1.

Es sind Spritzgießformen bekannt (siehe z.B. JP-A-10-024 425, US-A-4 402 657 oder EP-A-0 713 756), welche zwei Formplatten und wenigstens eine zwischen diesen Formplatten aufgenommene Zwischenplatte aufweisen, wobei die hergestellten Spritzgießteile nach dem Öffnen der Form in der Zwischenplatte gehalten sind. Um die Teile aus der Zwischenplatte auszuwerfen, muß die Form so weit geöffnet werden, daß von außen eine Auswerferplatte, an der sich Auswerferstifte befinden, zwischen die Zwischenplatte und eine Formplatte eingeschoben werden kann. Nach dem Plazieren der Auswerferplatte wird die Zwischenplatte gegen die Auswerferplatte mit den Stiften bewegt, wobei die Spritzgießteile von den Stiften aus der Zwischenplatte gedrückt werden. Darauf muß die Zwischenplatte wieder nach vorne bewegt werden, um die Auswerferplatte aus der Form fahren zu können. Dann wird die Form wieder geschlossen. Die beschriebenen Vorgänge bedingen eine relativ hohe Taktzeit, da einerseits die Form relativ weit geöffnet werden muß, um ausreichend Platz für ein kollosionsfreies Einfahren der Auswerferplatte zu schaffen und auch das Einund Ausfahren der Auswerferplatte durch den sehr großen Hub viel Zeit in Anspruch nimmt.

Der Erfindung liegt die Aufgabe zugrunde, eine gattungsgemäße Form zu schaffen, bei der die Taktzeiten verkürzt werden können.

Gelöst wird diese Aufgabe mit einer Form mit den Merkmalen des Anspruches 1.

Vorteilhafte Weiterbildungen der Erfindung sind Gegenstand der abhängigen Ansprüche.

Bei der Erfindung sind die Auswerfer nicht mehr an einer Auswerferplatte befestigt, sondern direkt an einer Formplatte. Die Auswerfer sind dabei seitlich zu den Formhohlräumen in der Zwischenplatte versetzt, d.h. daß die Auswerfer im geschlossenen Zustand der Form neben den Formhohlräumen liegen.

Zum Auswerfen der Spritzgießteile ist es dann nur erforderlich, die Form so weit zu öffnen bzw. die Zwischenplatte so weit von der Formplatte mit den Auswerfern abzuheben, daß diese frei liegen, die Formplatte um den relativ geringen Betrag des seitlichen Versatzes der Auswerfer gegenüber den Formhohlräumen zu verschieben und die Zwischenplatte zurückzuziehen, wodurch die Auswerfer in die Formhohlräume an der Zwischenplatte eingeschoben und die Spritzgießteile ausgeworfen werden. Es ist ersichtlich, daß die Hubwege, die bei der erfindungsgemäßen Form zum Auswerfen der Spritzgießteile erforderlich sind, wesentlich geringer sind als beim Stand der Technik, so daß die Zykluszeiten erheblich verkürzt werden können.

Grundsätzlich sind zwei Varianten bevorzugt, die Auswerfer an der Formplatte anzuordnen. Einerseits ist es möglich, daß die Auswerfer Stifte sind, die an der Formplatte starr befestigt sind und daß an der Zwischenplatte und gegebenenfalls an der zweiten Formplatte Ausnehmungen für die Stifte vorgesehen sind. Anderseits ist es aber auch möglich, daß die Auswerfer Stifte sind, die in der Formplatte federnd in Bewegungsrichtung der Zwischenplatte verschiebbar aufgenommen sind.

Die erstgenannte Ausführungsform weist den Vorteil auf, daß die Auswerfer auf relativ einfache Weise an der Formplatte befestigt sind. Dafür ist es allerdings erforderlich, in der Zwischenplatte und - je nach Länge der Stifte - gegebenenfalls in der gegenüberliegenden Formplatte Ausnehmungen für die Auswerfer vorzusehen, in denen die Stifte bei geschlossener Form aufgenommen sind.

Bei der zweitgenannten Ausführungsform sind die Ausnehmungen in der Zwischenplatte und der gegenüberliegenden Formplatte nicht erforderlich, dafür ist ein etwas höherer Aufwand für die federnde Lagerung und Führung der Stifte in der Formplatte in Kauf zu nehmen.

Ein Ausführungsbeispiel der Erfindung ergibt sich aus der nachfolgenden Beschreibung unter Bezugnahme auf die Zeichnungen. Es zeigt: Fig. 1 eine erfindungsgemäße Form im geschlossenen Zustand, Fig. 2 die Form im geöffneten Zustand, Fig. 3 die Form im geöffneten Zustand kurz vor dem Auswerfen der Spritzgießteile und Fig. 4 die Form im geöffneten Zustand während des Auswerfens der Spritzgießteile.

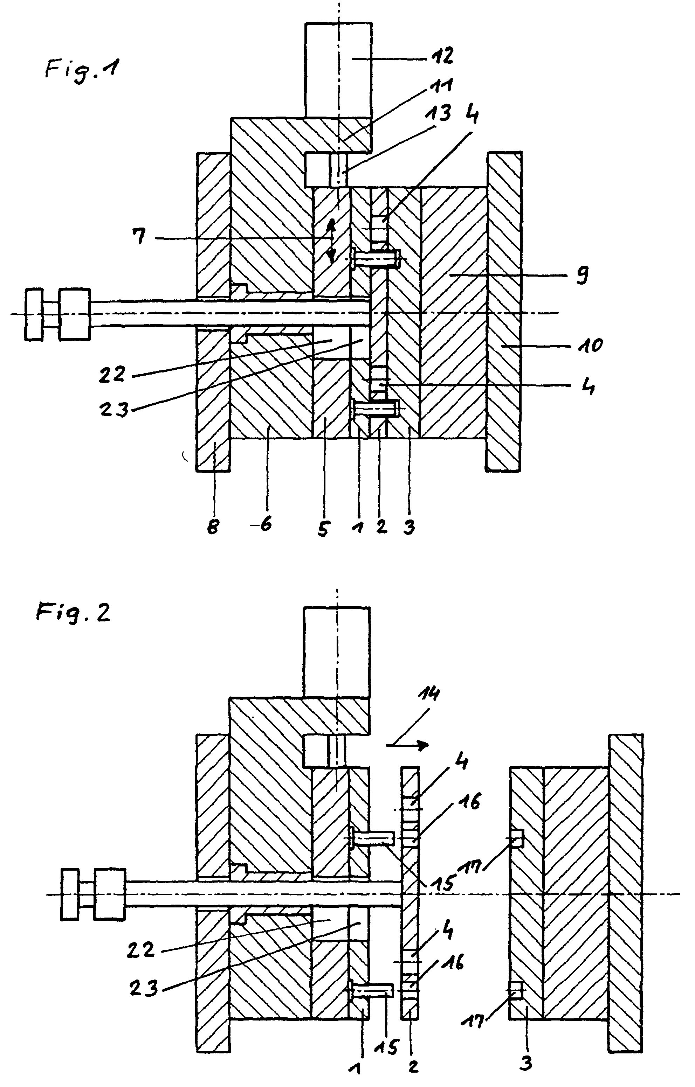

In den Fig. 1 bis 4 ist stark schematisiert eine Spritzgießform dargestellt, die eine erste Formplatte 1, eine Zwischenplatte 2 und eine zweite Formplatte 3 aufweist. In der Zwischenplatte 2 sind schematisch zwei Formhohlräume 4 dargestellt, die sich natürlich teilweise auch in die Formplatten 1 und 3 erstrecken können. Die Formplatte 1 ist an einer Trägerplatte 5 befestigt, die ihrerseits an einer Kühlplatte 6 in Richtung des Doppelpfeiles 7 verschiebbar gelagert ist. Die Kühlplatte 6 wiederum ist an einem Träger 8 des Maschinenrahmens befestigt. Dementsprechend ist auch die zweite Formplatte 3 über eine Kühlplatte 9 an einem Träger 10 des Maschinenrahmens befestigt.

Details der Form, wie z.B. Einspritzdüsen für den Werkstoff, Kühlbohrungen, Isolierplatten u. dgl., sind in den Zeichnungen nicht dargestellt, da sie auf an sich bekannte Weise ausgeführt sein können und für das Verständnis der vorliegenden Erfindung nicht von Belang sind.

Zum Verschieben der Trägerplatte 5 ist an einem Vorsprung 11 der Kühlplatte 6 ein doppelt wirkender Druckluftzylinder 12 befestigt, dessen Kolbenstange-13 mit der Trägerplatte 5 verbunden ist. Das Öffnen der Form durch Auseinanderfahren der Formplatten 1 und 3 in die in Fig. 2 dargestellte Stellung erfolgt über einen nicht dargestellten Antrieb der Spritzgießmaschine. Während des Öffnens der Form durch Auseinanderfahren der Formplatten 1 und 3 wird entweder gleichzeitig oder im Anschluß daran auch die Zwischenplatte 2 in Richtung des Pfeiles 14 vorgeschoben, bis die in Fig. 2 dargestellte Stellung erreicht ist. Der Antrieb der Zwischenplatte 2 erfolgt über eine Stange 20, die über eine Kupplung 21 mit einem nicht dargestellten Antrieb der Spritzgießmaschine verbunden ist. Damit die Bewegung der Formplatte 1 und der Trägerplatte 2 durch die Stange 20 nicht behindert wird, weisen diese langlochartige Ausnehmungen 22, 23 auf, durch welche die Stange 20 ragt. In der in Fig. 2 gezeigten Stellung liegen in der Formplatte 1 befestigte Auswerferstifte 15 frei, d.h. daß sie nicht mehr in Ausnehmungen 16 in der Zwischenplatte 2 bzw. Ausnehmungen 17 in der Formplatte 3 aufgenommen sind.

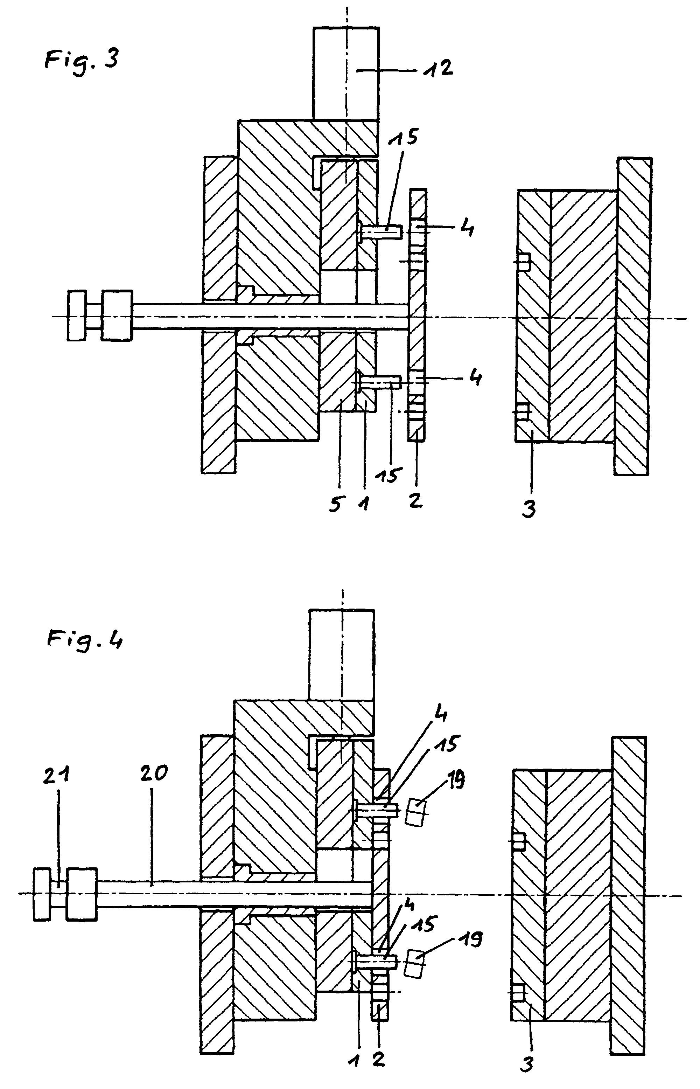

In dieser Stellung der Zwischenplatte 2 und der Formplatte 3 kann die Formplatte 1 mit der Trägerplatte 5 durch Betätigen des Druckluftzylinders 12 verschoben werden, bis sie die in Fig. 3 dargestellte Stellung erreicht, in der die Stifte 15 vor den Formnestern 4 in der Zwischenplatte 2 positioniert sind, in welchen sich die Spritzgießteile befinden. Durch anschließendes Zurückziehen der Zwischenplatte 2 in Richtung des Pfeiles 16 (Fig. 4) werden die Spritzgießteile 19 durch die Stifte 15 aus den Formkammern 4 ausgeworfen.

Das Schließen der Form erfolgt derart, daß ausgehend von Fig. 4 die Zwischenplatte 2 wieder nach vorne bewegt wird, bis die in Fig. 3 dargestellte Stellung erreicht ist, worauf die Formplatte 1 mit der Trägerplatte 5 in die in Fig. 2 dargestellte Stellung zurückgefahren und anschließend die Zwischenplatte 2 und die Formplatten 1 und 3 zusammengefahren werden, bis wieder die in Fig. 1 dargestellte Stellung erreicht ist, in der in einem neuen Zyklus wieder Werkstoff in die Formhohlräume 4 eingespritzt werden kann.

In einer in den Zeichnungen nicht dargestellten Ausführungsform können die starr in der Formplatte 1 befestigten Stifte auch durch federnd gelagerte Stifte ersetzt werden, die durch an ihrer Rückseite, d.h. zwischen den Stiften und der Trägerplatte 5, angeordnete Druckfedern gegen die Zwischenplatte 2 hin belastet werden. Die Ausnehmungen 16, 17 in der Zwischenplatte 2 und der Formplatte 3 können in diesem Fall entfallen, da die Stifte beim Zurückziehen der Zwischenplatte 2 bzw. Schließen der Form gegen die Kraft der Federn in die Formplatte 1 hineingedrückt und somit vollständig in dieser versenkt werden. Die Kraft der Federn ist dabei so zu dimensionieren, daß einerseits kein wesentlich erhöhter Kraftaufwand für das Zurückziehen der Zwischenplatte 2 erforderlich ist, anderseits aber ein sicheres Auswerfen der Spritzgießteile 19 aus der Zwischenplatte 2 gewährleistet ist.

## Patentansprüche

1. Form für Spritzgießwerkzeuge mit zwei Formplatten (1, 3) und wenigstens einer zwischen diesen Formplatten (1, 3) aufgenommenen Zwischenplatte (2), die wenigstens einen Formhohlraum (4) begrenzen, sowie Einrichtungen (20, 21), um die Form zu öffnen und die Zwischenplatte (2) von den Formplatten (1, 3) abzuheben, **dadurch gekennzeichnet, daß** eine Formplatte (1) in einer Ebene rechtwinkelig zur Bewegungsrichtung der Zwischenplatte (2) bewegbar ist (Pfeil 7) und daß an dieser Formplatte (1) Auswerfer (15) für Spritzgießteile angeordnet sind.

2. Form nach Anspruch 1, **dadurch gekennzeichnet, daß** die Auswerfer (15) Stifte sind, die an der Formplatte (1) starr befestigt sind und daß an der Zwischenplatte (2) und gegebenenfalls an der zweiten Formplatte (3) Ausnehmungen (16, 17) für die Stifte (15) vorgesehen sind.

3. Form nach Anspruch 1, **dadurch gekennzeichnet, daß** die Auswerfer (15) Stifte sind, die in der Formplatte (1) federnd in Bewegungsrichtung der Zwischenplatte (2) verschiebbar aufgenommen sind.

4. Form nach einem der Ansprüche 1 bis 3, **dadurch gekennzeichnet, daß** die Formplatte (1) linear verschiebbar gelagert ist.

5. Form nach einem der Ansprüche 1 bis 4, **dadurch gekennzeichnet, daß** zum Antrieb der Formplatte (1) ein Druckmittelmotor, insbesondere ein doppelt wirkender Druckluftzylinder (12), vorgesehen ist.

## Claims

1. Mould for injection moulding devices comprising two mould plates (1, 3) and at least one intermediate plate (2) received between these mould plates (1, 3) and delimiting at least one mould cavity (4), and devices (20, 21) to open the mould and lift the intermediate plate (2) from the mould plates (1, 3), **characterised in that** one mould plate (1) can be moved in a plane at right angles to the direction of movement of the intermediate plate (2) (arrow 7) and **in that** ejectors (15) for injection mouldings are arranged on this mould plate (1).

2. Mould according to claim 1, **characterised in that** the ejectors (15) are pins rigidly fixed to the mould plate (1) and **in that** recesses (16, 17) are provided for the pins (15) on the intermediate plate (2) and optionally on the second mould plate (3).

3. Mould according to claim 1, **characterised in that** the ejectors (15) are pins which are received in the mould plate (1) so as to be resiliently displaceable in the movement direction of the intermediate plate (2).

4. Mould according to any one of claims 1 to 3, **characterised in that** the mould plate (1) is mounted so as to be linearly displaceable.

5. Mould according to any one of claims 1 to 4, **characterised in that** a pressure-fluid-type motor, in particular a dual-acting pneumatic cylinder (12), is provided to drive the mould plate (1).

## Revendications

1. Moule pour outils de moulage par injection, comportant deux plaques de moule (1, 3) et au moins une plaque intermédiaire (2) disposée entre lesdites plaques de moule (1, 3), qui définissent au moins une cavité de moule (4), ainsi que des dispositifs (20, 21) pour ouvrir le moule et soulever la plaque intermédiaire (2) des plaques de moule (1, 3),
**caractérisé en ce qu'**une plaque moule (1) peut être déplacée dans un plan perpendiculairement à la direction de déplacement de la plaque intermédiaire (2) (flèche 7) et **en ce que** des éjecteurs (15) pour les pièces moulées par injection sont prévus sur la plaque de moule (1).

2. Moule selon la revendication 1, **caractérisé en ce que** les éjecteurs (15) sont des tiges qui sont fixées rigidement à la plaque de moule (1) et **en ce qu'**il est prévu dans la plaque intermédiaire (2) et éventuellement dans la deuxième plaque de moule des évidements (16, 17) pour les tiges.(15).

3. Moule selon la revendication 1, **caractérisé en ce que** les éjecteurs (15) sont des tiges qui sont montées élastiquement dans la plaque de moule (1), avec possibilité de coulissement dans la direction de déplacement de la plaque intermédiaire (2).

4. Moule selon une des revendications 1 à 3, **caractérisé en ce que** la plaque de moule (1) est montée avec possibilité de déplacement linéaire.

5. Moule selon une des revendications 1 à 4, **caractérisé en ce qu'**il est prévu, pour l'entraînement de la plaque de moule (1), un moteur à fluide sous pression, en particulier un vérin pneumatique à double effet (12).
